Europäisches Patentamt

European Patent Office

Office européen des brevets

(11) Veröffentlichungsnummer: **0 250 970**
**A2**

(12) **EUROPÄISCHE PATENTANMELDUNG**

(21) Anmeldenummer: **87108448.9**

(22) Anmeldetag: **11.06.87**

(51) Int. Cl.4: **C08L 25/00 , C08L 23/02**

(30) Priorität: **13.06.86 DE 3620008**

(43) Veröffentlichungstag der Anmeldung:
**07.01.88 Patentblatt 88/01**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Hoenl, Hans, Dr.**
**Hauptstrasse 69 a**
**D-6719 Obersuelzen(DE)**
Erfinder: **Mittnacht, Hans, Dr.**
**Zinkgraefstrasse 44**
**D-6940 Weinheim(DE)**

(54) **Thermoplastische Formmasse.**

(57) Die Erfindung betrifft eine thermoplastische Formmasse, enthaltend, jeweils bezogen auf die Formmasse aus A + B + C,

A 30 bis 60 Gew.% eines Styrol oder eines substituiertes Styrol enthaltenden Polymerisates

B 30 bis 60 Gew.% mindestens eines Homo- oder Copolymerisates eines alpha-Olefinmonomeren

C 2 bis 20 Gew.% mindestens eines linearen, hydrierten Styrol und Butadien enthaltenden Blockcopolymerisates.

Die Formmasse ist dadurch gekennzeichnet, daß der Gesamtstyrolgehalt des Blockcopolymerisates C im Bereich von 40 bis 60 Gew.%, bezogen auf C, liegt und daß 5 bis 25 Gew.% des Blockcopolymerisates als Blockpolystyrol vorliegen und der Rest des Styrols in 60 bis 40 Gew.% Butadien statistisch eingebaut vorliegt, wobei das Blockcopolymerisat C ein mittleres Molekulargewicht (Gewichtsmittel) von 50.000 bis 200.000 aufweist.

Die Formmasse wird verwendet zur Herstellung von Formteilen, insbesondere nach dem Tiefziehver-fahren.

EP 0 250 970 A2

## Thermoplastische Formmasse

Die Erfindung betrifft eine thermoplastische Formmasse, enthaltend, jeweils bezogen auf die Formmasse aus A + B + C,

A ein Styrol oder substituiertes Styrol enthaltendes Polymerisat

B ein Homo-oder Copolymerisat eines alpha-Olefinmonomeren und

C ein lineares, hydriertes Styrol und Butadien enthaltendes Blockcopolymerisat.

Zum Stand der Technik nennen wir:

(1) EP 00 42 153

(2) EP 00 04 685 und

(3) DE-AS-20 61 361.

Formmassen aus Polystyrol und Polyolefin sind seit längerem bekannt. Sie finden vor allem im Verpackungssektor Anwendung. Es ist ferner bekannt, für diese Stoffe als Mischungsvermittler Styrol-Isopren-Zwei-Blockcopolymerisate [vgl. (1)] zu verwenden. Auch hydrierte Styrol-Butadien-Styrol-Drei-Blockcopolymerisate [vgl. (2)] werden als mischungsvermittelnde Zusätze beansprucht.

Schließlich ist aus (3) die Verwendung hydrierter Styrol-Butadien-Zwei-Blockcopolymerisate bekannt.

Die vorstehend beschriebenen Mischungen haben aber immer noch Nachteile in Bezug auf die Schlagzähigkeit.

Es bestand daher die Aufgabe für Lebensmittelverpackungen Formmmassen zu entwickeln, die eine bessere Spannungsrißbeständigkeit und eine geringere Wasserdampfdurchlässigkeit als schlagfestes Polystyrol besitzen sollten. Weiterhin sollte die Verarbeitbarkeit beim Tiefziehen besser sein als bei Polypropylen.

Diese Aufgabe wird gelöst durch eine Formmasse gemäß Anspruch 1.

Die Erfindung betrifft daher eine thermoplastische Formmasse, enthaltend, jeweils bezogen auf die Formmasse aus A + B + C,

A 30 bis 60 Gew.% mindestens eines Styrol oder eines substituiertes Styrol enthaltenden Polymerisates

B 30 bis 60 Gew.% mindestens eines Homo-oder Copolymerisates eines alpha-Olefinmonomeren

C 2 bis 10 Gew.% mindestens eines linearen, hydrierten Styrol und Butadien enthaltenden Blockcopolymerisates.

Die Formmasse ist dadurch gekennzeichnet, daß der Gesamtstyrolgehalt des Blockcopolymerisates im Bereich von 40 bis 60 Gew.%, bezogen auf C, liegt und daß 5 bis 25 Gew.% des Blockcopolymerisates C als Blockpolystyrol vorliegen und der Rest des Styrols in 60 bis 40 Gew.% Butadien statistisch eingebaut vorliegt, wobei das Blockcopolymerisat C ein mittleres Molekulargewicht (Gewichtsmittel) von 50.000 bis 200.000 aufweist.

Nachstehend werden der Aufbau der erfindungsgemäßen Formmasse aus den Komponenten, die Herstellung der Komponenten und die der Formmasse beschrieben.

Die Formmasse enthält die Komponenten A, B und C; vorzugsweise besteht sie aus diesen.

Ferner kann die Formmasse als Komponente D übliche Zusatzstoffe enthalten.

Bezogen auf die Formmasse aus A + B + C enthält sie:

A: 30 bis 60 Gew.%, vorzugsweise 35 bis 55 Gew.%

B: 30 bis 60 Gew.%, vorzugsweise 35 bis 55 Gew.%

C 2 bis 20 Gew.%, vorzugsweise 4 bis 14 Gew.%.

Bezogen auf 100 Gew.Teile A + B + C, können noch zugegen sein

D: 0,05 bis 25 Gew.Teile, insbesondere 0,1 bis 10 Gew.Teile.

Komponente A

Als Komponente A der erfindungsgemäßen Formmasse kommen Homopolymerisate oder Copolymerisate von Styrol mit einem der eng verwandten insbesondere methylsubstituierten Styrole in Frage, in denen ein Methylrest als Substi tuent am aromatischen Ring oder an der Seitenkette vorhanden ist. Hier ist vor allem p-Methylstyrol zu erwähnen. Diese Copolymerisate können aus Styrol bzw. substituiertem Styrol in an sich bekannter Weise hergestellt werden. Als Styrolpolymerisate kommen ferner Pfropfmischpolymerisate in Frage, die durch Polymerisation von Styrol oder substituiertem Styrol in Gegenwart eines Kautschuks, z.B. eines Butadienpolymerisates oder kautschukartigen Styrol/Butadien-Polymerisats, hergestellt werden. Der Polybutadiengehalt kann 3 bis 20 Gew.%, vorzugsweise 5 bis 12 Gew.%, bezogen auf A, betragen. Der mit Styrol gepfropfte Kautschuk (Weichphase) liegt dabei fein dispergiert in einer als Hartmatrix bezeichneten Polystyrolphase vor. Die Herstellung derartiger schlagfester Polystyrole ist dem Fachmann bekannt. Polystyrole und Polymerisate substituierter Styrole sind, ebenso wie die schlagfesten Polystyrole, im Handel erhältlich. Die Viskositätszahl der Komponente A soll im Bereich von 60 bis 120 ml/g liegen.

## Komponente B

Als Homo-oder Copolymerisate von alpha-Olefinmonomeren kommen die des Ethylens und Propylens in Frage. Es seien genannt Polyethylen von hoher Dichte (Bereich 0,94 bis 0,97 g/cm³) mit Schmelzflußindices (gemessen BS 2782, Teil 105 C) von 0,001 bis 2,0 dg/Minute oder die Copolymerisate von Ethylen und geringen Mengen (ca. 10 %) Propylen. Die Herstellung derartiger Produkte ist bekannt.

Bevorzugt werden ausschließlich jedoch die isotaktischen Polypropylene angewendet, die nach dem Gasphasenverfahren der BASF unter Verwendung von Ziegler-Natta-Katalysatoren hergestellt werden und die Schmelzindices im Bereich von 0,1 bis 90,0/g/10 Min. (MFI 190/5) aufweisen können. Besonders bevorzugt sind dabei solche Produkte, deren ataktischer Anteil zwischen 0,1 und 20 Gew.% liegt (gemessen als xylollöslicher Anteil unter Standardbedingungen).

## Komponente C

Die Komponente C stellt ein lineares aus Styrol und Butadien bestehendes, Blockcopolymerisat dar, das in an sich bekannter Weise selektiv hydriert worden ist, wobei lediglich die von Monomerenbaustein Butadien herrührenden Doppelbindungen zu mehr als 90 %, insbesondere mehr als 97 % abgesättigt werden. Derartige Verfahren zur Hydrierung sind an sich bekannt und können z.B. nach dem in DE-OS 27 48 884 beschriebenen Verfahren durchgeführt werden.

Wesentlich für den Aufbau des Blockcopolymerisates vor der Hydrierung ist, daß der Gesamtstyrolgehalt des Blockcopolymerisates im Bereich von 40 bis 60 Gew.%, vorzugsweise 50 bis 55 Gew.%, bezogen auf C, liegt und daß 5bis 25 Gew.% des Blockcopolymerisates C als Blockpolystyrol vorliegen und der Rest des Styrols in 60 bis 40 Gew.%, vorzugsweise 50 bis 45 Gew.% Butadien statistisch eingebaut vorliegt, wobei das Blockcopolymerisat C ein mittleres Molekulargewicht (Gewichtsmittel) von 50.000 bis 200.000, vorzugsweise 75.000 bis 150.000, aufweist.

Die Herstellung derartiger Blockcopolymerisate ist an sich bekannt und erfolgt durch anionische Polymerisation von Mischungen aus Butadien und Styrol in Gegenwart von Li-alkylinitiatoren und von THF. Sie können z.B. nach dem in der DE-OS 31 06 959 beschriebenen Verfahren hergestellt werden, wobei insbesondere adiabatisch in einer Verfahrensstufe gearbeitet wird (Beispiel 2).

## Komponente D

Die erfindungsgemäße Formmasse kann als Komponente D Zusatzstoffe enthalten, die für die Komponenten A, B und C typisch und gebräuchlich sind. Als solche Zusatzstoffe seien beispielsweise genannt: Füllstoffe, Farbstoffe, Pigmente, Antistatika, Antioxidantien, auch Flammschutzmittel und insbesondere die Schmiermittel, die für die Weiterverarbeitung der Formmasse z.b. bei der Herstellung von Formkörpern bzw. Formteilen erforderlich sind.

## Herstellung der Formmasse

Die Herstellung der Formmasse erfolgt durch Mischen der Komponenten A, B, C und gegebenenfalls D nach allen bekannten Methoden. Vorzugsweise geschieht jedoch das Mischen der Komponenten A, B und C durch gemeinsames Extrudieren, Kneten oder Verwalzen der Komponenten bei höheren Temperaturen, z.B. in der Schmelze, in einem Ein-oder Zweiwellenextruder.

Die erfindungsgemäße Formmasse kann nach den bekannten Verfahren der Thermoplastverarbeitung bearbeitet werden, also z.B. durch Extrudieren, Spritzgießen, Kalandrieren, Hohlkörperblasen, Pressen oder Sintern: besonders bevorzugt werden aus den nach dem erfindungsgemäßen Verfahren hergestellten Formmassen Folien durch Extrusion hergestellt.

Die in der vorliegenden Anmeldung beschriebenen Parameter werden wie folgt bestimmt:

1. Lochkerbschlagzähigkeit, LKSZ, nach DIN 53 753 in [kJ/m²]

2. Streckspannung,SS, Reißfestigkeit, RF, Reißdehnung, RD, nach DIN 53 455 in [N/mm²]

3. Fallbolzenversuch, FT, nach DIN 53 443 in [Nm]

4. Wasserdampfdurchlässigkeit, WDD, nach DIN 53 122/1 (100 μm Foliendicke, 23°C, 85 % rel. Feuchte) in [g/m²d]

5. Spannungsrißbeständigkeit als relative Reißdehnung nach 50 Minuten: rel. RD (50 ■ ) nach Einfluß von Frigen und von Öl (Livio) nach DIN 53 449 in [%]

Für die Herstellung erfindungsgemäßer Formmassen und von Vergleichsmassen werden die nachfolgend beschriebenen Produkte verwendet.

## Komponente A

A ein schlagfestes Polystyrol mit einem Polybutadiengehalt von 7,9 Gew.%, mittlere Teilchengröße der Weichphase 2,7 μm (Mittelwert: 50 Volumenprozent der als Weichphase vorliegenden Kautschukpartikel liegen oberhalb dieses Wertes und 50 Volumenprozent unterhalb dieses Wertes) enthaltend 0,12 Gew.% eines sterisch gehinderten Phenols als Antioxydans und 2,3 Gew.% Weißöl als Schmiermittel, VZ der Hartmatrix 70 ml/g.

Komponente B

B₁ Ein nach dem BASF-Gasphasenverfahren hergestelltes Polypropylen mit dem MFI (190/5) von 12 g/10 Min. und einem in Xylol bestimmten ataktischen Anteil von 16 Gew.%.

B₂ Ein nach dem BASF-Gasphasenverfahren hergestelltes Polypropylen mit dem MFI (190/5) von 22 g/10 Min. und einem in Xylol bestimmten ataktischen Anteil von 3 Gew.%.

Komponente C

C₁ Ein selektiv hydriertes Styrol-Butadien-Blockcopolymerisat mit einem Gesamtstyrolgehalt von 53 Gew.% (Rest 47 Gew.% Butadien). Diese 53 Gew.% sind aufgeteilt in 10 Gew.% in Form von Blockpolystyrol und in 43 Gew.% in obengenannten 47 Gew.% Butadien statistisch verteilt.

C₂ Selektiv hydriertes Dreiblockcopolymerisat. Der Gesamtstyrolgehalt beträgt 33 Gew.%. Es weist außenliegende gleichlange Styrolblöcke auf. $\bar{M}_w$ = 220.000 (Handelsname: Kraton G 1651)

C₃ Selektiv hydriertes Dreiblockcopolymerisat. Der Gesamtstyrolgehalt beträgt 28 Gew.%. Es weist außenliegende gleichlange Styrolblöcke auf. $\bar{M}_w$ = 110.000 (Handelsname: Kraton G 1650)

Die Erfindung wird durch die nachfolgenden Beispiele und Vergleichsversuche näher erläutert. Die darin genannten Teile und Prozente beziehen sich, sofern nicht anders angegeben, auf das Gewicht.

Beispiele 1 bis 2 und Vergleichsversuche I bis II

Die in der Tabelle angegebenen Gewichtsteile der Komponenten A, B$_n$ und C$_n$ wurden in trockener Form mit zusätzlich jeweils 0,1 Teilen ®Irganox 1076 gemischt und auf zwei Doppelschneckenextrudern, z.B. ZSK-Typ von Werner & Pfleiderer, extrudiert. Der Mischvorgang erfolgte dabei mittels einer Kombination aus einem Haupt- und einem Nebenextruder. Im Hauptextruder wurden B$_n$ und C$_n$ , im Nebenextruder A gefördert. Temperatur beider Extruder: 220°C. Aus dem getrockneten Granulat der Proben wurden die Formmassen für die Eigenschaftsprüfungen durch Spritzgießen hergestellt.

Ein Teil des Granulats wurde mittels Extruder mit Breitschlitzdüse zu einer 700 μm dicken Folie verarbeitet, die mittels Tiefziehen zu Bechern der Wanddicke 450 μm und einem Gewicht von 5,0 g umgeformt wurde. Die Verarbeitung verlief deutlich besser als mit purem Polypropylen-Granulat, wo ein sogenanntes "Durchhängen" der Folie und Faltenbildung zu beobachten sind. Zudem erfordert die Polypropylen-Verarbeitung eine höhere Wärmeaufnahme und eine stärkere Kühlung als die Verarbeitung der erfindungsgemäßen Formmassen. Es resultierten steife, schlagzähe hochglänzende Becher bei guter Ausformung.

In die Tabelle sind die an den Prüfkörpern gemessenen Werte verschiedener Parameter mit aufgenommen worden.

0 250 970

Tabelle

| Beisp. | Zusammensetzung (Gew.%) | | | | | | LKSZ | SS | RF | RD | FT | | | WDD | rel. RD | |
|---|---|---|---|---|---|---|---|---|---|---|---|---|---|---|---|---|
| | $A_1$ | $B_1$ | $B_2$ | $C_1$ | $C_2$ | $C_3$ | | | | | 240°C* | 260°C* | 280°C* | | Frigen 50• | Livio Öl 50• |
| 1 | 45 | 45 | – | 10 | – | – | 15,5 | 10,3 | 7,9 | 18,6 | 19,6 | 19,5 | 18,6 | 3,0 | 75 | 78 |
| 2 | 45 | – | 45 | 10 | – | – | 11,3 | 12,1 | 9,3 | 14,9 | 25,7 | 19,9 | 16,5 | 2,0 | – | – |
| Vergleichs-versuche | | | | | | | | | | | | | | | | |
| I | 45 | 45 | – | ⊣ | 10 | – | 6,4 | 15,1 | 15,1 | 10,7 | 0,2 | 0,2 | 0,2 | 5,0 | 51 | 42 |
| II | 45 | 45 | – | –. | – | 10 | 9,4 | 15,2 | 15,2 | 15,5 | 0,6 | 1,8 | 1,5 | 5,5 | – | – |

* Temperatur der Masse der Fallbolzentestkästchen

## Ansprüche

1. Thermoplastische Formmasse, enthaltend, jeweils bezogen auf die Formmase aus A + B + C,
A 30 bis 60m Gew.% mindestens eines Styrol oder eines substituiertes Styrol enthaltenden Polymerisates
B 30 bis 60 Gew.% mindestens eines Homo-oder Copolymerisates eines alpha-Olefinmonomeren
C 2 bis 20 Gew.% mindestens eines linearen, hydrierten Styrol und Butadien enthaltenden Blockcopolymerisates
dadurch gekennzeichnet, daß der Gesamtstyrolgehalt des Blockcopolymerisates C im Bereich von 40 bis 60 Gew.%, bezogen auf C, liegt und daß 5 bis 25 Gew.% des Blockcopolymerisates C als Blockpolystyrol vorliegen und der Rest des Styrols in 60 bis 40 Gew.% Butadien statistisch eingebaut vorliegt, wobei das Blockcopolymerisat C ein mittleres Molekulargewicht (Gewichtsmittel) von 50.000 bis 200.000 aufweist.

2. Thermoplastische Formmasse, bestehend aus den Komponenten A, B und C.

3. Thermoplastische Formmasse, enthaltend, jeweils bezogen auf die Formmasse aus A + B + C,
A 35 bis 55 Gew.% mindestens eines Styrol oder eines substituiertes Styrol enthaltenden Polymerisates
B 35 bis 55 Gew.% mindestens eines Homo-oder Copolymerisates eines alpha-Olefinmonomeren
C 4 bis 14 Gew.% mindestens eines linearen, hydrierten Styrol und Butadien enthaltenden Blockcopolymerisates
dadurch gekennzeichnet, daß der Gesamtstyrolgehalt des Blockcopolymerisates C im Bereich von 40 bis 60 Gew.%, bezogen auf C, liegt und daß 5 bis 25 Gew.% des Blockcopolymerisates C als Blockpolystyrol vorliegen und der Rest des Styrols in 60 bis 40 Gew.% Butadien statistisch eingebaut vorliegt, wobei das Blockcopolymerisat C ein mittleres Molekulargewicht (Gewichtsmittel) von 50.000 bis 200.000 aufweist.

4. Thermoplastische Formmasse, enthaltend, jeweils bezogen auf die Formmasse aus A + B + C,
A 30 bis 60 Gew.% eines schlagfesten Polystyrols, das 3 bis 20 Gew.%, bezogen auf A, Polybutadien (gepfropft mit Styrol) aufweist,
B 30 bis 60 Gew.% mindestens eines Homo-oder Copolymerisates eines alpha-Olefinmonomeren
C 2 bis 20 Gew.% mindestens eines linearen, hydrierten Styrol und Butadien enthaltenden Blockcopolymerisates
dadurch gekennzeichnet, daß der Gesamtstyrolgehalt des Blockcopolymerisates C im Bereich von 40 bis 60 Gew.%, bezogen auf C, liegt und daß 5 bis 25 Gew.% des Blockcopolymerisates C als Blockpolystyrol vorliegen und der Rest des Styrols in 60 bis 40 Gew.% Butadien statistisch eingebaut vorliegt, wobei das Blockcopolymerisat C ein mittleres Molekulargewicht (Gewichtsmittel) von 50.000 bis 200.000 aufweist.

5. Thermoplastische Formmasse, enthaltend, jeweils bezogen auf die Formmasse aus A + B + C,
A 30 bis 60 Gew.% mindestens eines Styrol oder substituiertes Styrol enthaltenden Polymerisates
B 30 bis 60 Gew.% mindestens eines Homo-oder Copolymerisates eines alpha-Olefinmonomeren
C 4 bis 14 Gew.% mindestens eines linearen, hydrierten Styrol und Butadien enthaltenden Blockcopolymerisates
dadurch gekennzeichnet, daß der Gesamtstyrolgehalt des Blockcopolymerisates C im Bereich von 50 bis 55 Gew.%, bezogen auf C, liegt und daß 5 bis 25 Gew.% des Blockcopolymerisates C als Blockpolystyrol vorliegen und der Rest des Styrols in 50 bis 45 Gew.% Butadien statistisch eingebaut vorliegt und wobei das Blockcopolymerisat C ein mittleres Molekulargewicht (Gewichtsmittel) von 75.000 bis 150.000 aufweist.

6. Thermoplastische Formmasse nach Anspruch 1 enthaltend, bezogen auf 100 Teile A + B + C, 0.05 bis 25 Gew.Teile übliche Zusatzstoffe.

7. Verwendung der thermoplastischen Formmasse gemäß Anspruch 1 zur Herstellung von Formteilen.

8. Formteile aus Formmassen gemäß Anspruch 1.